(19) Europäisches Patentamt
European Patent Office
Office européen des brevets

(11) EP 2 073 084 B1

## (12) EUROPÄISCHE PATENTSCHRIFT

(45) Veröffentlichungstag und Bekanntmachung des Hinweises auf die Patenterteilung:
**27.02.2013 Patentblatt 2013/09**

(21) Anmeldenummer: **08021104.8**

(22) Anmeldetag: **04.12.2008**

(51) Int Cl.:
*G05B 19/19* (2006.01)    *G05B 19/4061* (2006.01)
*G05B 9/02* (2006.01)    *B25J 9/16* (2006.01)
*B25J 19/06* (2006.01)

(54) **Verfahren und Einrichtung zur Steuerung eines Roboter Manipulators**

Method and device for controlling a robot's manipulator

Procédé et dispositif de commande d'un manipulateur de robot

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.12.2007 DE 102007060680**

(43) Veröffentlichungstag der Anmeldung:
**24.06.2009 Patentblatt 2009/26**

(73) Patentinhaber: **KUKA Laboratories GmbH 86165 Augsburg (DE)**

(72) Erfinder: **Zimmermann, Uwe, Dr. 86152 Augsburg (DE)**

(74) Vertreter: **Schlotter, Alexander Carolus Paul Wallinger Ricker Schlotter Tostmann Patent- und Rechtsanwälte Zweibrückenstrasse 5-7 80331 München (DE)**

(56) Entgegenhaltungen:
**EP-A- 1 380 393      EP-A- 1 905 547
WO-A-2007/095662    US-B1- 6 212 443**

• **GÜNTHER SCHREIBER: "Robotassistent: Intuitives Programmieren von Fügevorgängen"[Online] 26. Januar 2005 (2005-01-26), Seiten 1-19, XP002524252 Gefunden im Internet: URL:http:// wwwiaim.ira.uka.de/germrob/FA4. 13-Protokolle/ Sitzung36/Beitrag_Schreiber. pdf> [gefunden am 2009-04-16]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Steuerung eines Manipulators, insbesondere eines Roboters, eine Steuereinrichtung zur Durchführung eines solchen Verfahrens sowie einen Manipulator, insbesondere einen Roboter, mit einer solchen Steuereinrichtung.

Ein Manipulator weist allgemein wenigstens einen motorisch bewegbaren Arbeitspunkt, beispielsweise eine Bohrerspitze, mehrere Kontaktpunkte zu einer gegriffenen Last, die Punkte einer Werkzeugschneide oder einer Schleifscheibe auf. In solchen Arbeitspunkte soll der Manipulator, teilweise erhebliche, Prozesskräfte aufbringen. So soll beispielsweise beim Bohren eine punktförmige Prozesskraft auf das Werkstück wirken, um einen Vorschub des Bohrers zu gewährleisten. Beim Fräsen soll eine ausreichende linienförmige Prozesskraft an der Schneidkante des Fräswerkzeuges aufgebracht werden, und beim Polieren oder Schleifen soll eine hohe flächenförmige Aufstandskraft einen ausreichenden Anpressdruck bewirken. Zur knapperen Darstellung werden gegensinnig gleiche Kräftepaare, i.e. Drehmomente, im Folgenden verallgemeinernd ebenfalls als Kräfte bezeichnet. Wenn also nachfolgend beispielsweise von einem Kraftsensor, von einer von einem Motor erzeugten Kraft oder von einer Prozesskraft die Rede ist, umfasst dies gleichermaßen einen Drehmomentsensor, ein von einem Motor erzeugtes Drehmoment bzw. ein Prozessdrehmoment.

Beim Transport oder der Bearbeitung von Werkstücken, aber auch bei der Überführung solcher Arbeitspunkte des Manipulators zwischen verschiedenen Arbeitslagen, befinden sich häufig Menschen im Bereich des Manipulators, beispielsweise zur Zuführung oder Entnahme von Werkstücken, zur Prüfung des Bearbeitungsprozesses, zur direkten Programmierung ("direct teaching") des Manipulators, oder auch aus Unachtsamkeit. Insbesondere können auch bei Service-Robotern, die mit Menschen interagieren sollen, solche Situationen auftreten. Hierdurch ergibt sich die Gefahr einer Kollision zwischen dem Manipulator, insbesondere dessen Arbeitspunkten, und dem Menschen. Gleichermaßen besteht auch die Gefahr einer Kollision mit anderen Hindernissen, die beispielsweise unabsichtlich in der Bahn der Arbeitspunkte des Manipulators stehen.

Dies ist insbesondere dann gefährlich, wenn der Manipulator, wie vorstehend erläutert, hohe Prozesskräfte aufbringen kann, die zu erheblichen Verletzungen des Menschen bzw. einer Beschädigung des Hindernisses oder des Manipulators führen können.

Hierzu ist es bekannt, das Vorhandensein von Menschen oder anderen Hindernissen in der Bahn eines Arbeitspunktes optisch, beispielsweise mittels CCD-Kamaras und Bilderkennungsverfahren, oder über Laserscanner zu detektieren und gegebenenfalls den Arbeitspunkt anzuhalten oder eine Ausweichbahn zu fahren. Diese Systeme sind, wiewohl hoch sicherheitsrelevant, störanfällig, beispielsweise durch Beeinträchtigung der optischen Randbedingungen.

Daher schlägt die EP 0 850 730 B1 vor, während der direkten Programmierung eines Roboters durch manuelles Führen eines Arbeitspunktes ("direct teaching") die Drehmomente zu begrenzen, die ein Proportional-Differential-Regler aus einer Differenz einer Ist- und einer Soll-Lage des Arbeitspunktes berechnet, welche anhand der auf den Arbeitspunkt ausgeübten Kräfte bestimmt wird. Zusätzlich soll der Bediener während dieses Teachens einen Sicherheitsschalter in der anderen Hand halten, dessen Loslassen zu einem sofortigen Halt des Roboters führt.

Dieses Verfahren ist grundsätzlich nur für das Einprogrammieren gewünschter Roboterbahnen möglich, da die Drehmomentbegrenzung das Aufbringen gewünschter hoher Prozesskräfte im Betrieb verhindern würde. Ein Schutz während des Betriebs, insbesondere während eines Bearbeitungsprozesses, ist somit nicht gegeben.

Die WO 2007/095662 A1 offenbart einen Roboter, der mittels Luftmuskeln aktuiert wird. Dabei wird die Länge von Stäben zwischen Gelenken des Roboters pneumatisch verändert. Druckmessungen und Überdruckventile in den Luftmuskeln ermöglichen eine Kraftmessung ohne zusätzliche Sensoren und eine einfache Beschränkung maximaler Aktuatorkräfte bei diesem strukturbedingt stets nachgiebigem Roboter.

Aufgabe der vorliegenden Erfindung ist es daher, die Gefahr einer Beschädigung von Hindernissen, insbesondere einer Verletzung von Menschen durch einen Manipulator im Betrieb zu verringern.

Diese Aufgabe wird durch ein Verfahren nach Anspruch 1, eine Steuereinrichtung nach Anspruch 14 bzw. einen Manipulator nach Anspruch 15 gelöst.

Nach einem erfindungsgemäßen Verfahren wird die Lage wenigstens eines Arbeitspunktes bestimmt. Als Lage eines Arbeitspunktes wird dabei gleichermaßen die Position des Arbeitspunktes im Raum und/oder die Orientierung eines Werkzeugs oder Endeffektes des Manipulators bezeichnet. Beispielsweise kann die Lage eines Arbeitspunktes durch Positions- und/oder Winkelkoordinaten eines in einem Flansch des Manipulators definierten Referenzpunktes bzw. -koordinatensystem ("tool center point" TCP) definiert sein, bezüglich dessen die Relativposition bzw. -orientierung eines Kontaktpunktes, einer Kontaktlinie oder einer Kontaktfläche eines am Flansch befestigten Werkzeuges bekannt sind. Die Lage eines Arbeitspunktes kann daher beispielsweise in Denavit-Hartenberg-Koordinaten oder in kartesischen oder Polarkoordinaten und/oder in Euler- oder Kardanwinkel beschrieben werden.

Die Lage des Arbeitspunktes kann bevorzugt entsprechend der Vorwärtskinematik des Manipulators aus den Winkellagen von Motoren bestimmt werden, die die Achsen des Manipulators bewegen. Bei nicht-redundanten Manipulatoren entspricht jede Arbeitspunktlage genau einer Stellung des Manipulators, i.e. einer Winkellage seiner Motoren. Gleichermaßen kann die Lage des Arbeitspunktes beispielsweise optisch erfasst oder entsprechend der inversen Dynamik aus in den Motoren anliegenden Kräften bestimmt werden.

Erfindungsgemäß wird nun bestimmt, ob die Lage eines Arbeitspunktes des Manipulators innerhalb eines vorgegebenen Prozessbereiches liegt oder nicht. Der Prozessbereich umfasst dabei Lagen des Arbeitspunktes, in denen der Manipulator Prozesskräfte auf die Umgebung ausüben soll.

Beim Bohren oder Greifen wird ein solcher Prozessbereich beispielsweise durch die Berührpunkte des Bohrers bzw. Greifers mit dem Werkstück definiert. Beim Fräsen entspricht der Prozessbereich der Eingriffslinie des Fräsers im Werkstück, während beim Schleifen oder Polieren der Prozessbereich durch die Kontaktfläche zwischen Werkzeug und -stück begrenzt wird.

Wenn der Arbeitspunkt in dem vorgegebenen Prozessbereich liegt, ist es äußerst unwahrscheinlich, dass ein Körperteil eines Menschen oder ein anderes Hindernis sich noch vor dem Arbeitspunkt befindet und durch hohe Prozesskräfte verletzt bzw. beschädigt werden könnte. Daher können in diesem Fall gefahrlos im Arbeitspunkt hohe Kräfte von dem Manipulator aufgebracht werden.

Umgekehrt sind solche hohen Kräfte im Arbeitspunkt nicht nötig, sondern gefährden im Weg stehende Hindernisse, solange der Arbeitspunkt sich nicht in dem vorgegebenen Prozessbereich befindet. Insbesondere ist dies beim Überführen des Arbeitspunktes von einem Arbeitsbereich in einen anderen Bearbeitungsbereich der Fall, bei dem es leicht zu einer Kollision mit Bedienpersonal oder anderen Hindernissen kommen kann, auf die der Manipulator dann keine hohen Kräfte ausüben soll.

Daher werden erfindungsgemäß die von dem Manipulator im Arbeitspunkt aufbringbaren Kräfte reduziert, falls die Lage des Arbeitspunktes nicht in dem vorgegebenen Prozessbereich liegt.

Von dem Manipulator aufbringbare Kräfte können dabei gleichermaßen vom Manipulator maximal aufbringbare Kräfte als auch diejenigen Kräfte sein, die der Manipulator in einer bestimmten Situation, beispielsweise bei bestimmten Soll-Ist-Abweichungen in der Lage des Arbeitspunktes aufgrund seiner Regelung aufbringt. Wie nachfolgend näher erläutert, können die von dem Manipulator im Arbeitspunkt aufbringbaren Kräfte also beispielsweise dadurch reduziert werden, dass Lastbegrenzungswerte in den Motoren des Manipulators verringert werden, um vom Manipulator maximal aufbringbare Kräfte zu reduzieren, oder dadurch, dass Reglerkonstanten des Manipulators so geändert werden, dass der Manipulator im Arbeitspunkt bei derselben Regelabweichung nur noch geringere Kräfte ausübt.

Bevorzugt können die von dem Manipulator aufbringbaren Kräfte dabei auf vorgegebene Höchstwerte, insbesondere im Wesentlichen auf Null, reduziert werden, so dass der Manipulator außerhalb des Prozessbereiches im Arbeitspunkt nur geringe bzw. keine Kräfte aufbringen kann. Insbesondere hierzu kann der Manipulator beispielsweise reibungs- und/oder gravitationskompensiert werden. Zur Gravitationskompensation beaufschlagen die Motoren des Manipulators diesen im Wesentlichen mit den Kräften, die den Gewichtskräften des Manipulators in seiner aktuellen Pose das Gleichgewicht halten. Diese Motorkräfte können beispielsweise aus einem mechanischen Ersatzmodell des Manipulators bestimmt werden. Der Manipulator verhält sich unter Gravitationskompensation dann quasi "schwerelos", er drückt insbesondere nicht mit seinem Gewicht auf den Arbeitspunkt. In analoger Weise werden bei der Reibungskompensation die der Bewegung des Manipulators entgegenwirkenden Reibungskräfte kompensiert, indem die Motoren des Manipulators diesen im Wesentlichen mit den Kräften beaufschlagen, die den Reibungskräften des Manipulators in seinem aktuellen Bewegungszustand das Gleichgewicht halten. Der Manipulator verhält sich unter Reibungskompensation dann quasi "reibungsfrei".

Gemäß einer bevorzugten Ausführung der vorliegenden Erfindung werden im Arbeitspunkt an dem Manipulator angreifende Kräfte, beispielsweise Zug-, Druckkräfte und/oder Drehmomente bestimmt.

Hierzu können zwischen einem Flansch des Manipulators und einem daran befestigten Werkzeug ein oder mehrere Prozesskraftsensoren, beispielsweise Dehmessstreifen, Kraftmessdosen oder dergleichen, angeordnet sein. Solche Prozesskraftsensoren können zusätzlich oder alternativ auch an dem Werkzeug selber angeordnet sein.

Gleichermaßen können auch aus den in den Motoren des Manipulators wirkenden Kräften die im Arbeitspunkt an dem Manipulator angreifenden Kräfte bestimmt werden, indem die in Richtung einer Bewegungsachse wirkenden Kräfte durch Motorkraftsensoren erfasst werden. Auf Basis eines statischen oder dynamischen Modells des Manipulators können dann die im Arbeitspunkt an dem Manipulator angreifenden Kräfte berechnet werden, die zusammen mit den in den Motoren wirkenden Kräften den Bewegungszustand, d.h. Stellung, Geschwindigkeit und Beschleunigung des Manipulators bestimmt. Diese können bei nicht-redundanten Manipulatoren in nicht-singulären Stellungen beispielsweise aus der bestimmten Lage des Arbeitspunktes, gewonnen werden.

Weist ein Manipulator mehr als einen Arbeitspunkt auf, beispielsweise mehrere Kontaktpunkte zum Greifen einer Last, die Berührpunkte einer Schneidkante oder einer Schleifscheibe, so können erfindungsgemäß die Lagen eines oder mehrerer dieser Arbeitspunkte, bevorzugt aller Arbeitspunkte des Manipulators berücksichtigt werden, indem die von dem Manipulator in den Arbeitspunkten aufbringbare Kräfte reduziert werden, falls die Lage wenigstens eines Arbeitspunktes nicht in dem vorgegebenen Prozessbereich liegt.

Bei der Bearbeitung durch Manipulatoren treten gewisse Toleranzen auf. Beispielsweise kann sich ein Arbeitspunkt im Laufe einer spanabhebenden Bearbeitung verändern. Gleichermaßen können Ungenauigkeiten bei der Positionierung eines Werkstückes, Werkstücktoleranzen oder Abnutzungen des Werkzeugs zu einer Differenz zwischen einer tatsächlichen und einer bestimmten theoretischen bzw. Soll-Lage des Arbeitspunktes führen. Daher wird der Prozessbereich, innerhalb dessen der Manipulator höhere Kräfte aufbringen kann, bevorzugt entsprechend vergrößert, so dass der Prozessbereich auch Lagen des Arbeitspunktes umfasst, die innerhalb eines vorbestimmten maximalen, vorzugsweise geringen, Abstandes zu Lagen des Arbeitspunktes liegen, in denen der Manipulator Prozesskräfte auf die Umgebung ausüben soll.

Diese zusätzlichen Lagen des Arbeitspunktes können dabei innerhalb eines Bereichs liegen, der die Lagen, in denen der Manipulator die Prozesskräfte ausüben soll, überall mit demselben, konstanten Abstand umgibt. Liegen aller Arbeitspunkte beispielsweise in einer Ebene, kann der Prozessbereich diese Ebene quaderförmig umschließen.

Gleichermaßen kann der Prozessbereich auch gezielt nur in einzelne Raum- bzw. Winkelrichtungen vergrößert werden. So kann beispielsweise der Prozessbereich zum Bohren in Richtung der Bohrachse verlängert werden, um eine ungenaue Positionierung des Werkstückes auszugleichen, während in einem Bereich neben der Bohrachse keine hohen Prozesskräfte ausgeübt werden sollen.

Der Prozessbereich kann dabei bevorzugt aus den Werkstück-Daten, beispielsweise CAD-Daten eines zu bearbeitenden Werkstücks vorgegeben werden. Wird beispielsweise die Bahn eines Arbeitspunktes eines Manipulators off-line anhand der zu bearbeitender Oberflächengeometrie eingegeben, kann ein Schlauch gleichbleibenden Abstandes um diese Bahn als Prozessbereich vorgegeben werden.

Gleichermaßen kann der Prozessbereich auch durch geometrische Körper vorgegeben werden. Wird beispielsweise eine Lage eines Arbeitspunktes, in der ein Manipulator Prozesskräfte ausüben soll, durch manuelles Heranführen des Arbeitspunktes eingegeben ("geteacht"), so kann der Prozessbereich durch einen Quader, eine Kugel oder dergleichen um diese Lage herum automatisch vorgegeben werden.

Im Regelfall sind die im Arbeitspunkt von einem Manipulator maximal aufbringbaren Kräfte begrenzt, beispielsweise direkt durch entsprechende Überlastsicherungen in Kraftsensoren zwischen Werkstück und Manipulatorflansch und/oder indirekt durch entsprechende Lastbegrenzungen der Motoren des Manipulators, deren Kräfte hierzu vorteilhafterweise durch eine entsprechende Sensorik erfasst werden können. In einer ersten Ausführung der vorliegenden Erfindung werden diese maximal aufbringbaren Kräfte, beispielsweise durch Herabsetzung der entsprechenden Grenzwerte in einer Überlastsicherung oder einer Lastbegrenzung der Motoren reduziert, falls die Lage des Arbeitspunktes sich nicht innerhalb des vorgegebenen Prozessbereiches befindet. Bevorzugt werden diese maximal aufbringbaren Kräfte außerhalb des Prozessbereiches auf geringe Werte, vorzugsweise im Wesentlichen auf Null, reduziert. Damit kann sichergestellt werden, dass der Manipulator auf ein Hindernis, insbesondere einen Menschen, der außerhalb des Prozessbereiches mit dem Arbeitspunkt des Manipulators kollidiert, keine oder nur geringe Kräfte ausübt, so dass eine Verletzung vermieden werden kann.

Auf der anderen Seite können im Prozessbereich, d.h. zur Bearbeitung, die notwendigen hohen Prozesskräfte auf die Umgebung ausgeübt werden, da der Manipulator hier höhere maximale Kräfte aufbringen kann.

Ein solches Verfahren ist insbesondere bei Manipulatoren mit positionsgeregelten Motoren einfach zu implementieren. Herkömmlicherweise werden für die einzelnen Motoren eines Manipulators entsprechend der inversen Kinematik aus dem Soll-Arbeitsprozess des Manipulators Soll-Positionen der Motoren errechnet, die beispielsweise durch Proportional-, Proportional-Differential-, Proportional-Integral- oder Proportional-Integral-Differential-(PID)-Regler angefahren werden. Sofern ein Hindernis ein Anfahren des Soll-Arbeitspunktes verhindert, erhöhen diese Positionsregler die Motorkraft, bis das Hindernis überwunden wird, d.h. ggf. ein Mensch verletzt wird, oder bis eine Lastbegrenzung des Motors wirksam wird. Durch Herabsetzung der Grenzwerte dieser Lastbegrenzungen für die Motoren, solange der Arbeitspunkt nicht innerhalb des Prozessbereiches liegt, kann auf einfache Weise eine Verletzung von Menschen bzw. eine Beschädigung von Hindernissen verhindert werden.

Gleichermaßen können ein, mehrere oder alle Motoren des Manipulators kraftgeregelt werden. Hierzu können in den kraftgeregelten Motoren Motorkraftsensoren vorgesehen sein, die die von dem entsprechenden Motor in Richtung der Bewegungsachse des Manipulators aufgebrachten Kräfte erfassen.

Anhand eines mathematischen Ersatzmodelles des Manipulators können diejenigen Kräfte errechnet werden, die die einzelnen Motoren in bestimmten Ist-Stellungen zur Kompensation von Gravitation, Reibung, elastischer Deformation und dergleichen, oder in bestimmten Soll-Stellungen zur zusätzlichen Kompensation von dynamischen Kräften, wie Trägheitskräften, Zentrifugalkräften und dergleichen, aufbringen müssen. Durch Einregeln entsprechender Motorkräfte, die sich aus dem mathematischen Ersatzmodell ergeben, kann der Manipulator im Idealfall in der Ist-Stellung gehalten bzw. entlang der Soll-Bahn verfahren werden. Zur Korrektur kleinerer Abweichungen, die sich beispielsweise aus Modellungenauigkeiten oder äußeren Störungen ergeben, kann zusätzlich ein Positionsregler aufgeschaltet werden, der beispielsweise anhand einer Soll-Ist-Differenz zwischen der gewünschten und der tatsächlichen Winkellage der einzelnen Motoren oder des Arbeitspunktes des Manipulators entsprechende Korrekturkräfte hinzuaddieren kann.

Sofern der Manipulator kraftgeregelt wird, ist es besonders einfach, gewünschte Prozesskräfte im Arbeitspunkt darzustellen. Diese können beispielsweise als äußere Kräfte den Kräften, die sich aus dem mathematischen Ersatzmodell zur Kompensation dynamischer, Gewichts- und Reibungskräfte ergeben, hinzuaddiert und die Soll-Kräfte der Motoren des Manipulators entsprechend vorgegeben werden. Dementsprechend können gemäß einer zweiten Ausführung der vorliegenden Erfindung die von dem Manipulator im Arbeitspunkt aufbringbaren Kräfte reduziert werden, falls der Arbeitspunkt nicht innerhalb des Prozessbereichs liegt, indem entsprechend geringe, bevorzugt verschwindende Kräfte als Sollkräfte im Arbeitspunkt vorgegeben werden. Zusätzlich können auch hier Lastbegrenzungen in den Motoren reduziert werden.

Auch mit positionsgeregelten Manipulatoren ist grundsätzlich die Aufbringung vorgegebener Prozesskräfte möglich. Hierzu kann beispielsweise die Soll-Lage des Arbeitspunktes geringfügig in das zu bearbeitende Werkstück hineinverlegt werden. Ein reiner Proportional- Positionsreglers bringt dann beständig eine Kraft im Arbeitspunkt des Manipulators auf, die sich analog einem Federkraftgesetz aus der Steifigkeit des Manipulators einschließlich des Reglers und der Soll-Ist-Differenz der Lagen des Arbeitspunktes ergibt. In diesem Fall kann also eine Reduzierung der vom Manipulator aufbringbaren Kräfte auch durch Reduzierung, vorzugsweise Eliminierung eines Integralanteils, und Reduzierung einer Proportionalitätskonstante eines Positionsreglers realisiert werden.

Gleichermaßen kann zusätzlich zu einer Positionsregelung auch, etwa durch einen Prozesskraftsensor, eine Kraft bestimmt werden, die im Arbeitspunkt an dem Manipulator angreift. Diese Ist-Prozesskraft kann in einer Kraftregelung mit einer vorgegebenen Soll-Prozesskraft verglichen und als Regeldifferenz einem Regler oder dergleichen zugeführt werden. Auch hier können durch Vorgabe geringerer Kräfte im Arbeitspunkt beispielsweise durch Verringern einer Proportionalitätskonstante des Positionsreglers die vom Manipulator aufbringbaren Kräfte reduziert werden, falls sich der Arbeitspunkt nicht innerhalb des Prozessbereichs befindet.

In einer bevorzugten Ausführung ist der Manipulator nachgiebig, i.e. nicht steif geregelt, d.h. er lässt sich manuell durch Kräfte, die beispielsweise in seinem Arbeitspunkt angreifen, gegen einen bestimmten Widerstand aus seiner Stellung verschieben und kehrt nach Wegfall dieser Kräfte selbstständig in diese Stellung zurück oder verharrt in der neuen Stellung. Ersteres ist beispielsweise durch eine weiche proportionale Lageregelung des Manipulators ohne Integralanteil, letzteres durch Kompensation der Gewichtskräfte durch eine Kraftregelung realisierbar. Hierzu kann in einer Kraftregelung ein mathematisches Ersatzmodell des Manipulators in dessen Ist-Stellung zugrunde gelegt werden, so dass nur Gewichtskräfte und dergleichen kompensiert werden.

Bei solchen nachgiebigen Manipulatoren kann die Reduzierung der aufbringbaren Kräfte im Arbeitspunkt besonders einfach dadurch erreicht werden, dass die Steifigkeit des Reglers außerhalb des Prozessbereiches reduziert, d.h. die Nachgiebigkeit des Manipulators erhöht wird. Sofern sich also der Manipulator außerhalb des Prozessbereiches befindet, bringt er aufgrund des weicher eingestellten Reglers auch bei größeren Abweichungen seiner aktuellen von einer SollStellung nur verhältnismäßig geringe Kräfte im Arbeitpunkt auf. Dies verhindert beispielsweise, dass der Manipulator einen Menschen verletzt, mit dem er beim Anfahren eines Prozessbereiches kollidiert. Denn obwohl sich die Regeldifferenz aufgrund der sich weiterhin auf den Prozessbereich zu bewegenden Soll-Lage und der durch den Menschen blockierten Ist-Lage beständig erhöht, erzeugt der weiche Regler nur verhältnismäßig geringe Kräfte. Andererseits können im Prozessbereich, in dem das Risiko gering ist, dass ein Mensch oder ein anderes Hindernis sich zwischen dem Arbeitspunkt des Manipulators und dem zu bearbeitenden Werkstück befindet, hohe Prozesskräfte aufgebracht werden, indem hier der Regler entsprechend steifer geschaltet wird.

Ein Manipulator kann nach einer Ausführung der vorliegenden Erfindung so geregelt werden, dass er sich als ganzes, i.e. in all seinen Gelenken nachgiebig verhält, falls ein Arbeitspunkt außerhalb des Prozessbereichs liegt. Ein solcher Manipulator vermeidet vorteilhaft auch Verletzungen von Menschen bzw. Beschädigungen von Hindernissen durch andere Teile des Manipulators, beispielsweise durch seine Gelenke, solange er nicht steif geregelt wird, um in seinem Arbeitspunkt die gewünschten Prozesskräfte aufzubringen.

Alternativ ist es auch möglich, den Manipulator nur partiell, beispielsweise nur in einem oder mehreren Gelenken oder nur in einer oder mehreren Richtung des kartesischen Raumes, in dem sich der Arbeitspunkt bewegt, nachgiebig zu regeln, falls ein Arbeitspunkt außerhalb des Prozessbereichs liegt. Ein solcher Manipulator verhindert ebenfalls Verletzungen bzw. Beschädigungen durch seinen Arbeitspunkt, beispielsweise durch ein scharfkantiges Werkzeug, gewährleistet auf der anderen Seite jedoch ein präzises Anfahren des Prozessbereichs durch die übrigen, steif geregelten Gelenke bzw. Richtungen. So kann beispielsweise bei Anfahren eines Kontaktpunktes in einer ausgezeichneten Raumrichtung, etwa vertikal von oben, der Manipulator modellbasiert nur in dieser Raumrichtung nachgiebig geregelt werden, so dass er beim Anfahren ein Hindernis zwischen Arbeitspunkt und Werkstück nicht mit hohen Kräften beaufschlagt und dabei beschädigt, andererseits durch externen Störungen nicht aus seiner Anfahrrichtung versetzt wird.

Obwohl durch die Reduzierung der aufbringbaren Kräfte im Arbeitspunkt des Manipulators außerhalb des Prozessbereiches das Risiko von Verletzungen bzw.

Beschädigungen bereits deutlich reduziert werden kann, ist es besonders vorteilhaft, den Manipulator entsprechend einer Ausnahmestrategie zu steuern, falls die von dem Manipulator im Arbeitspunkt aufgebrachten Kräfte einen Grenzwert übersteigen. Dieser Grenzwert kann außerhalb des Prozessbereiches ebenfalls reduziert werden, so dass der Manipulator bereits entsprechend der Ausnahmestrategie gesteuert wird, sobald er außerhalb des Prozessbereiches mit einem Hindernis kollidiert und dabei verhältnismäßig geringfügige Kräfte im Arbeitspunkt angreifen.

Im einfachsten Fall kann eine solche Ausnahmestrategie in einem Abschalten des Manipulators liegen, um ein weiteres Eindringen in ein Hindernis zu verhindern. Gleichermaßen sind auch intelligentere Ausnahmestrategien möglich. Beispielsweise kann der Manipulator das weitere Abfahren einer Soll-Trajektorie unterbrechen oder sich unter Umkehrung der Soll-Trajektorie von dem Hindernis zurückziehen, er kann sich in Richtung der am Arbeitspunkt angreifenden Kräfte zurückziehen, oder er kann, bevorzugt langsam, in eine sichere Ausnahmestellung verfahren.

Auch, wenn ein sogenannter Positionsschleppfehler, i.e. eine Abweichung zwischen Soll- und Ist-Lage des Arbeitspunktes zu groß wird, kann den Manipulator entsprechend einer Ausnahmestrategie gesteuert werden. Dieser Grenzwert kann außerhalb des Prozessbereiches ebenfalls reduziert werden, so dass der Manipulator bereits entsprechend der Ausnahmestrategie gesteuert wird, sobald er außerhalb des Prozessbereiches mit einem Hindernis kollidiert und daher sein Arbeitspunkt der Soll-Lage nicht folgen kann.

Da außerhalb des Prozessbereiches die vom Manipulator aufbringbaren Kräfte bereits reduziert sind, verringert sich das Risiko, dass der Manipulator bei der Steuerung entsprechend der Ausnahmestrategie Menschen verletzt oder Hindernisse beschädigt. Vorteilhafterweise kann die Ausnahmestrategie hierzu vorsehen, dass die aufbringbaren Kräfte noch weiter reduziert werden, insbesondere auf Null.

Weitere Aufgaben, Merkmale und Vorteile der vorliegenden Erfindung ergeben sich aus den Unteransprüchen und den nachfolgend beschriebenen Ausführungsbeispielen. Hierzu zeigen, teilweise schematisiert:

Fig. 1 einen Manipulator nach einer Ausführung der vorliegenden Erfindung, dessen Arbeitspunkt außerhalb eines Prozessbereiches liegt;

Fig. 2 den Manipulator nach Fig. 1 beim Eintreten des Arbeitspunktes in den Prozessbereich;

Fig. 3 den Manipulator aus Fig. 1, der im Arbeitspunkt Kräfte auf ein Werkstück ausübt;

Fig. 4-6 eine der Figurenfolge Fig. 1 bis 3 entsprechende Darstellung, wobei ein Hindernis zwischen dem Arbeitspunkt und dem Werkstück vorhanden ist;

Fig. 7-9 eine der Figurenfolge Fig. 4-6 entsprechende Darstellung einer Abwandlung der Ausführung; und

Fig. 10 ein Ablaufdiagramm eines Verfahrens nach einer Ausführung der vorliegenden Erfindung.

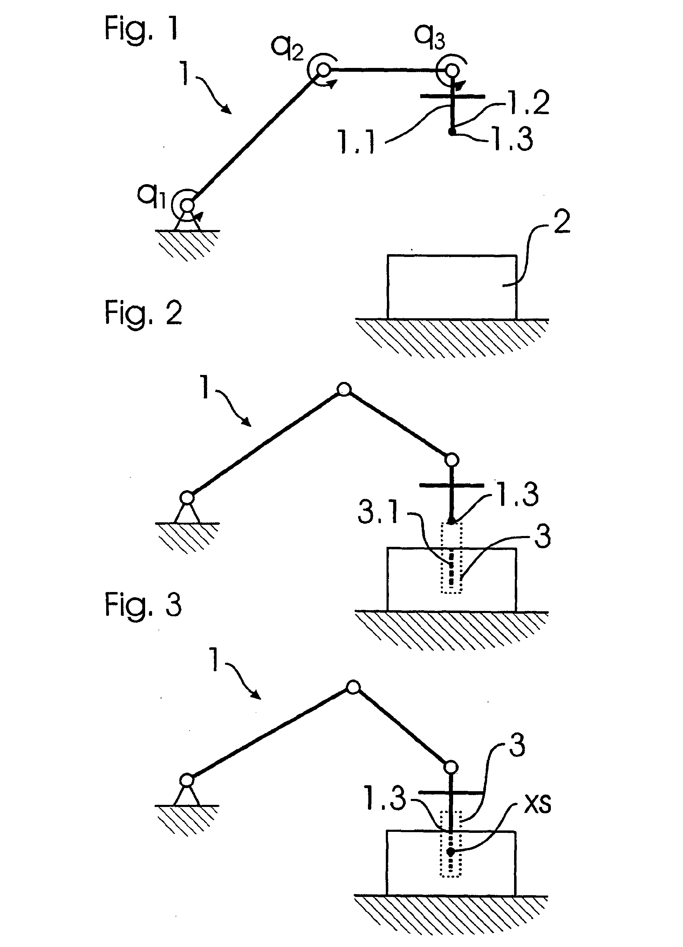

Fig. 1 zeigt schematisiert einen dreigliedrigen Manipulator nach einer Ausführung der vorliegenden Erfindung in Form eines Roboters 1 zum Bohren eines Werkstückes 2. Hierzu ist an einem Flansch 1.1 des Roboters 1 ein Werkzeug in Form eines Bohrers 1.2 angeordnet, dessen Bohrerspitze einen Arbeitspunkt 1.3 des Roboters 1 definiert.

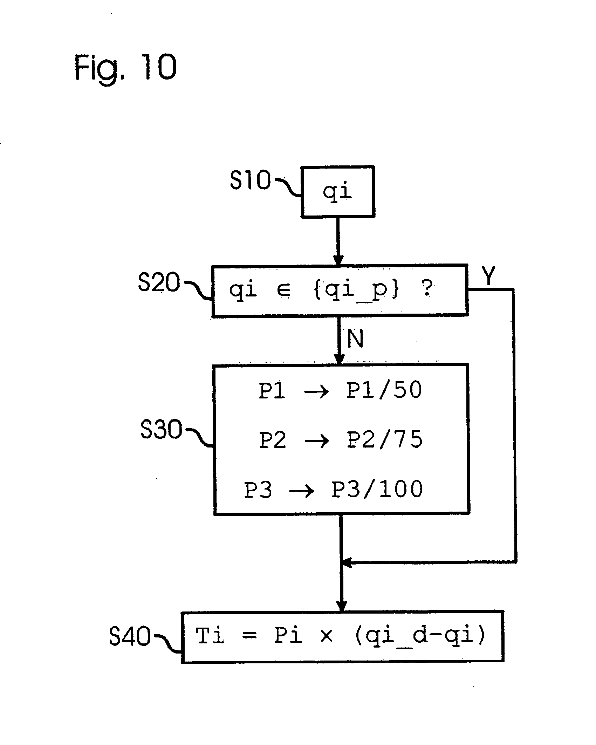

Die Lage des Arbeitspunktes 1.3 im Raum bzw. relativ zu dem Werkstück 2 wird durch eine Lagebestimmung (nicht dargestellt) des Roboters 1 bestimmt. Hierzu werden in einem Schritt S10 (vgl. Fig. 10) die Winkellagen qi = q1, q2, q3 der einzelnen Glieder des Roboters durch Resolver erfasst und die Lage des Arbeitspunktes 1.3 entsprechend der direkten Vorwärtskinematik des Roboters 1 errechnet.

Ein Prozessbereich 3 für das Bohren des Werkstückes 2 durch den Roboter 1 enthält zum einen die Abfolge der Lagen des Arbeitspunktes 1.3 während des geplanten Bohrvorganges, d.h. eine Strecke 3.1 zwischen dem Aufsetzpunkt des Bohrers 1.2 an der Oberfläche des Werkstückes 2 und dem Endpunkt der Bohrerspitze 1.3 bei Erreichen der vorgegebenen Bohrungstiefe (Fig. 2).

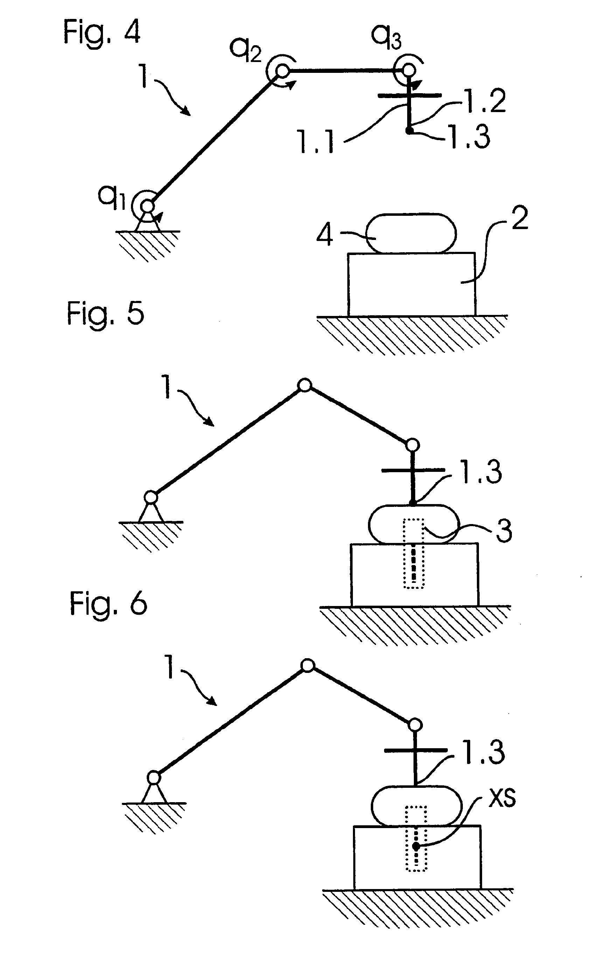

Zusätzlich enthält der Prozessbereich 3, wie in Fig. 2 strichliiert angedeutet, auch die Menge all derjenigen Lagen des Arbeitspunktes 1.3, die von der Strecke 3.1, entlang der der Manipulator Prozesskräfte auf das Werkstück 2 ausüben soll, innerhalb eines vorbestimmten maximalen Abstandes liegen. Dieser maximale Abstand ist so gewählt, dass Hindernisse, die wenigstens so groß wie ein menschlicher Finger sind und sich auf der Oberfläche des Werkstückes 2 befinden, nicht mehr vollständig innerhalb dieses maximalen Abstandes, d.h. des Prozessbereiches 3, liegen können (vgl. Fig. 5).

Der Prozessbereich 3 ist im Ausführungsbeispiel während des gesamten Bearbeitungsprozesses konstant und umfasst alle Lagen 3.1 des Arbeitspunktes 1.3. In einer nicht dargestellten Abwandlung kann der Prozessbereich auch mit der jeweiligen Soll-Lage des Arbeitspunktes mitwandern. In diesem Fall kann der Prozessbereich vorteilhafterweise kleiner vorgegeben werden.

Der Roboter 1 wird in dem zur einfacheren Darstellung gewählten Ausführungsbeispiel positionsgeregelt, obwohl gleichermaßen eine modellbasierte Nachgiebigkeitsregelung, eine Kraftregelung oder eine hybride Positions-Kraft-Regelung möglich ist. Hierzu ist zum Anfahren des Werkstückes 2 durch die Bohrerspitze 1.3 ein Soll-Verlauf der Winkellagen q1-q3 der drei Motoren (nicht dargestellt) vorgegeben, die die drei Glieder des Roboters 1 relativ zueinander bewegen. Eine Proportional-Regelung des Roboters 1 (nicht dargestellt) erzeugt in einem Schritt S40 (Fig. 10) in jedem dieser Motoren ein Motormoment Ti (i = 1, 2, 3), das proportional zur Abweichung der Soll-Winkellage qi_d des Motors i und der vom Resolver gemessenen Ist-Lage qi ist:

$$Ti = Pi \times (qi\_d-qi)$$

In den Figuren ist die Soll-Lage xs des Arbeitspunktes 1.3 durch einen ausgefüllten Kreis angedeutet. Während der Roboter 1 beim Anfahren des Prozessbereiches 3 (Figuren 1, 2) der Soll-Lage im Wesentlichen exakt folgt, ist dies während des Bearbeitungsvorganges (Fig. 3) nicht der Fall. Hier ist die Soll-Lage so vorgegeben, dass sie bei normaler Bohrgeschwindigkeit stets in einem gleichbleibenden Abstand vor der Bohrerspitze 1.3 in Richtung der Bohrachse liegt. Dieser Abstand entspricht Soll-Ist-Differenzen Δi in den drei Motoren des Roboters 1, die sich aus der inversen Kinematik ergeben.
Dementsprechend erzeugt der Positionsregler während des Bohrens in den drei Motoren i entsprechende Motormomente Ti = Pi × Δi, die eine entsprechende konstante Vorschubkraft auf die Bohrspitze 1.3 als gewünschte Prozesskraft bewirken.
Um nun eine Verletzung von Menschen oder eine Beschädigung von Hindernissen durch den Roboter 1 zu verhindern, wird dieser nachgiebig geregelt, solange sein Arbeitspunkt 1.3 sich außerhalb des Prozessbereiches 3 befindet. Dieser Prozessbereich 3 lässt sich durch inverse Kinematik in entsprechende Winkellagen {qi_p} transformieren. Solange nun eine oder mehrere Winkellagen qi sich außerhalb dieser Menge {qi_p} befinden, werden einige oder alle Proportionalitätskonstanten Pi des Positionsreglers deutlich reduziert.
Im Ausführungsbeispiel wird hierzu in einem Schritt S20 (Fig. 10) überprüft, ob alle Winkellagen qi, i=1, 2, 3 sich innerhalb der Menge {qi_p} befinden, i.e. der Arbeitspunkt im vorgegebenen Prozessbereich liegt oder nicht. Falls alle Winkellagen qi, i=1, 2, 3 sich innerhalb der Menge {qi_p} befinden (S20: "Y"), bleiben die Proportionalitätsfaktoren der Gelenkregler auf ihren (steifen) Ausgangswerten, um im Prozessbereich auch hohe Kräfte im Arbeitspunkt aufbringen zu können. Befindet sich wenigstens eine Winkellage qi nicht innerhalb der vorgegebenen Menge, i.e. liegt der Arbeitspunkt nicht im vorgegebenen Prozessbereich (S20: "N"), so wird in einem Schritt S30 der Proportionalitätsfaktor P3 des letzten, vordersten Gelenkes des dreigliedrigen Roboters 1 um den Faktor 100 reduziert, der Proportionalitätsfaktor P2 des mittleren Gelenkes um den Faktor 75 und der Proportionalitätsfaktor P1 des ersten, inertialen Gelenkes um den Faktor 50. Dies ermöglicht einerseits weiterhin das Anfahren des Prozessbereiches. Andererseits führt der insgesamt deutlich weichere Positionsregler dazu, dass sich der Roboter 1 bei einer Kollision seines Endeffektors mit einem Hindernis, durch die Kräfte auf den Arbeitspunkt 1.3 oder andere Teile des nachgiebigen Roboters 1, als ganzes nachgiebig verhält.
In der Figurenfolge Fig. 4 bis Fig. 6 ist eine solche Situation dargestellt, in der ein Finger 4 einer Bedienperson (nicht dargestellt) unabsichtlich auf dem Werkstück 2 liegt, während der Roboter 1 seinen Prozessbereich anfährt, i.e. seine Bohrerspitze 1.3 auf die Oberfläche des Werkstückes 2 zu bewegt, auf der der Finger 4 liegt. Da der Prozessbereich 3, d.h. der maximale Abstand zur vorgegebenen Bohrstrecke 3.1, entsprechend gering gewählt ist, berührt die Bohrspitze 1.3 den Finger 4, während sie noch außerhalb des Prozessbereiches 3 ist (Fig. 5). Die durch den ausgefüllten Kreis dargestellte Soll-Lage xs des Arbeitspunktes 1.3 fährt weiter (Fig. 6). Aufgrund dieser Soll-Lage xs versucht der Roboter 1, in seinen positionsgeregelten Gelenken entsprechend nachzufahren.
Da die Positionsregler jedoch reine Proportionalregler mit Proportionalitätskonstanten Pi sind, die um den Faktor 100 (PE), 75 (P'') bzw. 50 (P1) reduziert sind, solange der Arbeitspunkt 1.3 sich außerhalb des Prozessbereichs 3 befindet, erzeugen die Motoren auch bei sich vergrößernder Soll-Ist-Abweichung der Lage des Arbeitspunktes 1.3 keine großen Kräfte. Der Roboter 1 übt somit in seinem Arbeitspunkt 1.3 ebenfalls nur geringe Kräfte auf das Hindernis 4 auf, sondern verharrt zunächst im wesentlichen in seiner Stellung.
Die Kraft, die zwischen dem Werkzeug 1.2 und dem Flansch 1.1 des Roboters wirkt, wird durch einen Prozesskraftsensor (nicht dargestellt), der beispielsweise eine Kraftmessdose umfassen kann, erfasst. Während des Anfahrens des Prozessbereiches sollten im Normalfall am Arbeitspunkt 1.3 überhaupt keine oder nur sehr geringe Trägheitskräfte auftreten. Daher erkennt der Regler des Roboters 1 anhand der (geringen) Kräfte, die aufgrund des nachgiebigen Roboters 1 zwischen Bohrspitze 1.3 und Finger 4 auftreten, eine Kollision und schaltet in eine Ausnahmeregelung um, in der der Manipulator 1 entsprechend einer Ausnahmestrategie gesteuert wird.
Hierzu wird die Richtung der auf den Arbeitspunkt 1.3 wirkenden Kraft durch den Prozesskraftsensor bestimmt und der Roboter 1 anschließend so gesteuert, dass er sich in Richtung der von dem Finger 4 auf die Bohrerspitze 1.3 wirkenden Reaktionskraft zurückzieht. Damit wird eine Verletzung der Bedienperson zuverlässig verhindert.
Wie der Vergleich der Figuren 3 und 6 zeigt, wird die Soll-Lage des Arbeitspunktes 1.3 in das Werkstück 2 gelegt, um während der Bearbeitung ausreichende Vorschubkräfte auf den Bohrer 1.2 auszuüben. Sofern sich der Arbeitspunkt 1.3 in dem Prozessbereich 3 befindet (Fig. 3), i.e. kein Hindernis, insbesondere kein Körperteil einer Bedienperson, sich zwischen Arbeitspunkt und Werkstück befindet, erzeugt der Regler des nun steifen Roboters 1 aufgrund dieses Abstandes zwischen Soll- und Ist-Lage des Arbeitspunktes 1.3 entsprechend hohe Motormomente Ti, der Roboter 1 kann entsprechende Vorschubkräfte aufbringen. Sofern sich jedoch ein solches Hindernis, insbesondere ein solcher Körperteil 4, zwischen dem Arbeitspunkt 1.3 und der Oberfläche des Werkstückes 2 befindet (Fig. 6) und so ein Eintreten des Arbeitspunktes 1.3 in den Prozessbereich verhindert, werden durch die reduzierten Proportionalitätsfaktoren Pi auch die von dem nun nachgiebigen Manipulator aufbringbaren Kräfte im Arbeitspunkt 1.3 reduziert und so eine Verletzung bzw. Beschädigung wirksam verhindert.

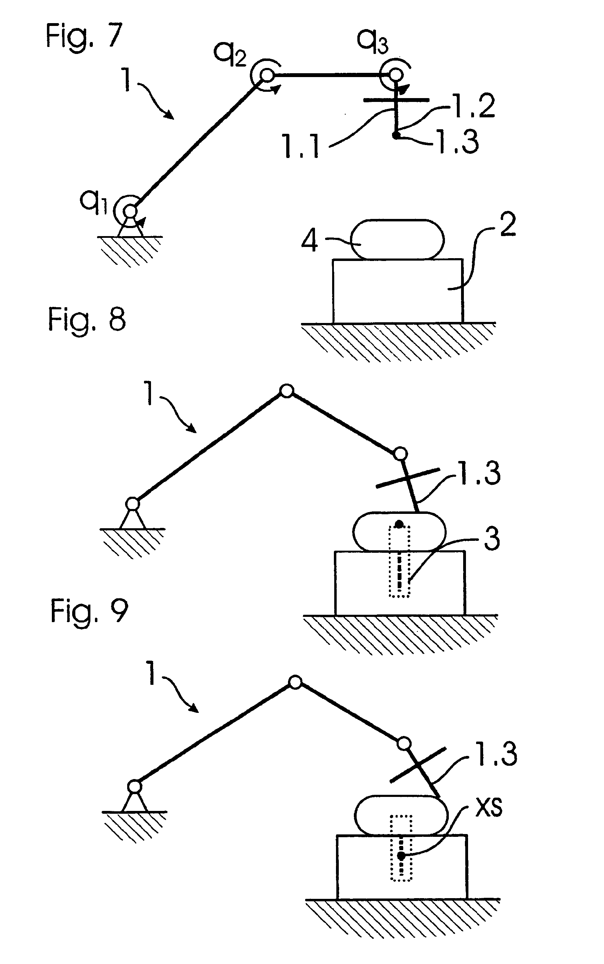

In einer in den Fig. 7 bis Fig. 9 dargestellten, im übrigen der vorstehend erläuterten Ausführung entsprechenden Abwandlung des Ausführungsbeispiels wird exemplarisch nur der Proportionalitätsfaktor P3 des letzten, vordersten Gliedes des dreigliedrigen Roboters 1 um den Faktor 100 reduziert. Dies ermöglicht einerseits weiterhin das präzise Anfahren des Prozessbereiches durch den im ersten und zweiten Gelenk steifen Positionsreglers, der beispielsweise die Gewichtskräfte des Manipulators 1 kompensiert. Andererseits führt der im dritten Gelenk weiche Positionsregler dazu, dass der Roboter 1 unter Ausknicken seines Endeffektors einem Hindernis, durch das bei Kollision Kräfte auf den Arbeitspunkt 1.3 ausgeübt werden, nachgiebig ausweicht.

In der Figurenfolge Fig. 7 bis Fig. 9 ist wiederum die Situation dargestellt, in der ein Finger 4 einer Bedienperson unabsichtlich auf dem Werkstück 2 liegt, während der Roboter 1 seinen Prozessbereich anfährt.

Aufgrund der sich in den Prozessbereich weiterbewegenden Soll-Lage xs (ausgefüllter Kreis in den Fig. 7-9) fährt der Roboter 1 in seinem ersten und zweiten Gelenk entsprechend nach.

Da sich der Arbeitpunkt 1.3 jedoch außerhalb des Prozessbereiches 3 befindet, ist der Proportionalitätsfaktor P3 für das dritte Gelenk noch um den Faktor 100 reduziert. Der Roboter 1 übt daher in seinem dritten Gelenk trotz der anwachsenden Soll-Ist-Differenz in der Lage des Arbeitspunktes 1.3 nur ein sehr geringes Drehmoment aus. Dementsprechend ist der Roboter 1 in seinem dritten Gelenk so nachgiebig, dass die Bohrerspitze 1.3 den Finger 4 nicht verletzt, sondern unter Ausknicken des Flansches 1.1 ausweicht.

Bezugszeichenliste

| | |
|---|---|
| 1 | Roboter |
| 1.1 | Endeffektor |
| 1.2 | Werkzeug |
| 1.3 | Arbeitspunkt |
| 2 | Werkstück |
| 3 | Prozessbereich |
| 3.1 | Soll-Bohrung |
| 4 | Hindernis |
| q1, q2, q3 | Gelenkwinkel |
| xs | Soll-Lage des Arbeitspunktes |

**Patentansprüche**

1. Verfahren zur Steuerung eines Manipulator, insbesondere eines Roboters (1), der einen motorisch bewegbaren Arbeitspunkt (1.3) aufweist, mit dem Schritt: L

   - Bestimmen einer Lage des Arbeitspunktes (S10);
   **gekennzeichnet durch** die Schritte:

   - Bestimmen, ob die Lage des Arbeitspunktes in einem vorgegebenen Prozessbereich (3) liegt oder nicht (S20), und
   - Reduzieren der im Arbeitspunkt von dem Manipulator aufbringbaren Kräften, falls die Lage des Arbeitspunktes nicht in dem vorgegebenen Prozessbereich liegt (S30, S40).

2. Verfahren nach Anspruch 1, **dadurch gekennzeichnet, dass** der Prozessbereich Lagen (3.1) des Arbeitspunktes umfasst, in denen der Manipulator punktförmig, linienförmig und/oder flächenförmig Prozesskräfte auf die Umgebung ausüben soll.

3. Verfahren nach Anspruch 2, **dadurch gekennzeichnet, dass** der Prozessbereich Lagen des Arbeitspunktes umfasst, die innerhalb eines vorbestimmten maximalen Abstandes zu Lagen des Arbeitspunktes liegen, in denen der Manipulator Prozesskräfte auf die Umgebung ausüben soll.

4. Verfahren nach Anspruch 3, **dadurch gekennzeichnet, dass** der maximale Abstand höchstens 5 mm, insbesondere höchstens 2 mm beträgt.

5. Verfahren nach einem der vorhergehenden Ansprüche 2-4, **dadurch gekennzeichnet, dass** der Prozessbereich (3) mittels Werkstück-Daten, insbesondere CAD-Daten vorgegeben wird.

6. Verfahren nach einem der vorhergehenden Ansprüche 2-4, **dadurch gekennzeichnet, dass** der Prozessbereich (3) durch geometrische Körper, insbesondere Quader, Kugeln, Zylinder, Kegel und/oder Ellipsoide vorgegeben wird.

7. Verfahren nach einem der vorhergehenden Ansprüche, **gekennzeichnet durch** den Schritt:

   - Bestimmen einer im Arbeitspunkt an dem Manipulator angreifenden Kraft.

**8.** Verfahren nach einem der vorhergehenden Ansprüche, **dadurch gekennzeichnet, dass** im Arbeitspunkt von dem Manipulator maximal aufbringbare Kräften vorgegeben sind, wobei diese maximal aufbringbaren Kräften reduziert werden, falls die Lage des Arbeitspunktes nicht in dem vorgegebenen Prozessbereich liegt.

**9.** Verfahren nach einem der vorhergehenden Ansprüche, **dadurch gekennzeichnet, dass** ein Motor des Manipulators positionsgeregelt wird.

**10.** Verfahren nach einem der vorhergehenden Ansprüche, **dadurch gekennzeichnet, dass** ein Motor des Manipulators kraftgeregelt wird.

**11.** Verfahren nach Anspruch 10, **dadurch gekennzeichnet, dass** zur Kraftregelung des Motors ein mathematisches Ersatzmodell des Manipulators verwendet wird.

**12.** Verfahren nach einem der vorhergehenden Ansprüche, **dadurch gekennzeichnet, dass** eine Nachgiebigkeit des Manipulators erhöht wird, falls die Lage des Arbeitspunktes nicht in dem vorgegebenen Prozessbereich liegt.

**13.** Verfahren nach einem der vorhergehenden Ansprüche, **dadurch gekennzeichnet, dass** der Manipulator entsprechend einer Ausnahmestrategie gesteuert wird, falls von dem Manipulator im Arbeitspunkt aufgebrachte Kräfte einen Grenzwert übersteigen und/oder falls eine Differenz zwischen einer Soll- und einer Ist-Lage des Arbeitspunktes des Manipulators einen Grenzwert übersteigt.

**14.** Steuereinrichtung zur Durchführung des Verfahrens nach einem der vorhergehenden Ansprüche für einen Manipulator, insbesondere einen Roboter (1), der einen motorisch bewegbaren Arbeitspunkt aufweist, der eine Lagebestimmung zur Bestimmung einer Lage eines Arbeitspunktes (1.3) aufweist, **dadurch gekennzeichnet, dass** die Steuereinrichtung aufweist :

     eine Prozessbereichsbestimmung zur Bestimmung, ob die Lage des Arbeitspunktes in einem vorgegebenen Prozessbereich (3) liegt oder nicht, und
     eine Umschalteinrichtung zur Reduzierung der im Arbeitspunkt von dem Manipulator aufbringbaren Kräften, falls die Lage des Arbeitspunktes nicht in dem vorgegebenen Prozessbereich liegt.

**15.** Manipulator, insbesondere Roboter (1), der einen motorisch bewegbaren Arbeitspunkt (1.3), eine Lagebestimmung zur Bestimmung einer Lage des Arbeitspunktes und eine Steuereinrichtung nach Anspruch 14 aufweist.

**16.** Manipulator nach Anspruch 15, **dadurch gekennzeichnet, dass** er eine Kraftbestimmung zur Bestimmung einer im Arbeitspunkt an dem Manipulator angreifenden Kraft aufweist, die wenigstens einen Prozesskraftsensor umfasst, der zwischen einem Flansch (1.1) des Manipulators und einem daran befestigten Werkzeug (1.2) oder an dem Werkzeug (1.2) angeordnet ist.

**17.** Manipulator nach einem der vorhergehenden Ansprüche 15 bis 16, **dadurch gekennzeichnet, dass** er eine Kraftbestimmung zur Bestimmung einer im Arbeitspunkt an dem Manipulator angreifenden Kraft aufweist, die wenigstens einen Motorkraftsensor zur Bestimmung der von einem Motor des Manipulators in Richtung einer Bewegungsachse des Manipulators aufgebrachte Kraft umfasst.

**Claims**

**1.** A method for controlling a manipulator, in particular a robot (1), which has a motor-driven working point (1.3), with the step:

     - determining a location of a working point (S10); **characterized by** the steps:

         - determining if the location of the working point is located within a predetermined process interval (3) or not (S20), and
         - reducing the forces, which are applicable in the working point by the manipulator, if the location of the working point is not located in the predetermined process interval (S30, S40).

**2.** A method according to claim 1, **characterized in that** the process interval comprises locations (3.1) of the working point, in which the manipulator shall apply process forces on the environment in a point-shaped, line-shaped and/or area-shaped way.

**3.** A method according to claim 2, **characterized in that** the process interval comprises locations of the working point, which are located within a predetermined maximum distance relative to locations of the working point, in which the manipulator should apply process forces on the environment.

**4.** A method according to claim 3, **characterized in that** the maximum distance amounts at most 5 mm, in particular at most 2 mm.

**5.** A method according to one of the preceding claims 2-4, **characterized in that** the process interval (3) is predetermined by workpiece data, in particular CAD-data.

6. A method according to one of the preceding claims 2-4, **characterized in that** the process interval (3) is predetermined by geometrical bodies, in particular cuboids, spheres, cylinders, cones and/or ellipsoids.

7. A method according to one of the preceding claims, **characterized by** the step:

   - determining a force that engages in the working point on the manipulator.

8. A method according to one of the preceding claims, **characterized in that** in the working point maximum applicable forces by the manipulator are predetermined, whereas these maximum applicable forces are reduced, if the location of the working point is not located in the predetermined process interval.

9. A method according to one of the preceding claims, **characterized in that** a motor of the manipulator is position-controlled.

10. A method according to one of the preceding claims, **characterized in that** a motor of the manipulator is force-controlled.

11. A method according to claim 10, **characterized in that** a mathematical analogous model of the manipulator is used for the force-control of the motor.

12. A method according to one of the preceding claims, **characterized in that** a compliance of the manipulator is increased, if the location of the working point is not located within the predetermined process interval.

13. A method according to one of the preceding claims, **characterized in that** the manipulator is controlled according to an exception strategy, if the forces applied by the manipulator in the working point increase above a boundary value and/or if a difference between a commanded location and an actual location of the working point of the manipulator increases above a boundary value.

14. A control apparatus for carrying out of the method according to one of the preceding claims for a manipulator, in particular a robot (1), which has a mode-driven working point, which has a location determination for determining a location of a working point (1.3), **characterized in that** the control apparatus has:

   a determination of the process interval for determining, if the location of the working point is located within a predetermined process interval (3) or not, and a switching means for reducing of applicable forces in the working point by the manipulator, if the location of the working point is not located within the predetermined process interval.

15. A manipulator, in particular robot (1), which has a motor-driven working point (1.3), a location determination for determining a location of the working point, and a control apparatus according to claim 14.

16. A manipulator according to claim 15, **characterized in that** the manipulator has a force determination for determining a force engaging in the working point at the manipulator that comprises at least one process force sensor, which is arranged between a flange (1.1) of the manipulator and a tool (1.2), which is mounted thereupon or which is arranged on the tool (1.2).

17. A manipulator according to one of the preceding claims 15 to 16, **characterized in that** the manipulator has a force determination for determining a force engaging in the working point at the manipulator, which comprises at least one motor force sensor for determining a force applied by a motor of the manipulator in direction of one motion axis of the manipulator.

**Revendications**

1. Procédé de commande d'un manipulateur, en particulier d'un robot (1), comprenant un point de fonctionnement (1.3) mobile de façon motorisée, comprenant l'étape consistant à :

   - déterminer une position du point de fonctionnement (S10) ;
   **caractérisé par** les étapes consistant à :

   - déterminer si la position du point de fonctionnement se situe ou non (S20) dans une zone de traitement prédéfinie (3), et
   - réduire les forces pouvant être appliquées par le manipulateur dans le point de fonctionnement, au cas où la position du point de fonctionnement ne se situe pas dans la zone de traitement prédéfinie (S30, S40).

2. Procédé selon la revendication 1, **caractérisé en ce que** la zone de traitement comprend des positions (3.1) du point de fonctionnement dans lesquelles le manipulateur doit exercer sur les zones environnantes des forces de traitement par points, de façon linéaire et/ou de façon planiforme.

**3.** Procédé selon la revendication 2, **caractérisé en ce que** la zone de traitement comprend des positions du point de fonctionnement situées à l'intérieur d'une distance maximale prédéfinie par rapport aux positions du point de fonctionnement dans lesquelles le manipulateur doit exercer des forces de traitement sur les zones environnantes.

**4.** Procédé selon la revendication 3, **caractérisé en ce que** la distance maximale atteint au maximum 5 mm, en particulier au maximum 2 mm.

**5.** Procédé selon l'une quelconque des revendications 2 à 4, **caractérisé en ce que** la zone de traitement (3) est prédéfinie au moyen de données de pièce, en particulier de données CAO.

**6.** Procédé selon l'une quelconque des revendications 2 à 4, **caractérisé en ce que** la zone de traitement (3) est prédéfinie par des corps géométriques, en particulier des carrés, des sphères, des cylindres, des cônes et/ou des ellipsoïdes.

**7.** Procédé selon l'une quelconque des revendications précédentes, **caractérisé par** l'étape consistant à :

- déterminer une force s'appliquant sur le manipulateur dans le point de fonctionnement.

**8.** Procédé selon l'une quelconque des revendications précédentes, **caractérisé en ce que** des forces pouvant être appliquées au maximum par le manipulateur dans le point de fonctionnement sont prédéfinies, ces forces pouvant être appliquées au maximum étant réduites au cas où la position du point de fonctionnement ne se situe pas dans la zone de traitement prédéfinie.

**9.** Procédé selon l'une quelconque des revendications précédentes, **caractérisé en ce qu'**un moteur du manipulateur est asservi en déplacement.

**10.** Procédé selon l'une quelconque des revendications précédentes, **caractérisé en ce qu'**un moteur du manipulateur est asservi en force.

**11.** Procédé selon la revendication 10, **caractérisé en ce qu'**un modèle de remplacement mathématique du manipulateur est utilisé pour l'asservissement en force du moteur.

**12.** Procédé selon l'une quelconque des revendications précédentes, **caractérisé en ce qu'**une flexibilité du manipulateur est accrue au cas où la position du point de fonctionnement ne se situe pas dans la zone de traitement prédéfinie.

**13.** Procédé selon l'une quelconque des revendications précédentes, **caractérisé en ce que** le manipulateur est commandé en fonction d'une stratégie d'exception correspondant au manipulateur, au cas où des forces appliquées par le manipulateur dans le point de fonctionnement dépassent une valeur limite et/ou au cas où une différence entre une position théorique et une position réelle du point de fonctionnement du manipulateur dépasse une valeur limite.

**14.** Dispositif de commande destiné à mettre en oeuvre le procédé selon l'une quelconque des revendications précédentes pour un manipulateur, en particulier un robot (1), comprenant un point de fonctionnement mobile de façon motorisée ou comprenant une détermination de position destinée à déterminer une position d'un point de fonctionnement (1.3), **caractérisé en ce que** le dispositif de commande comprend :

un dispositif de détermination de la zone de traitement destiné à déterminer si la position du point de fonctionnement se situe ou non dans une zone de traitement prédéfinie (3), et un dispositif de commutation destiné à réduire les forces pouvant être appliquées par le manipulateur dans le point de fonctionnement, au cas où la position du point de fonctionnement ne se situe pas dans la zone de traitement prédéfinie.

**15.** Manipulateur, en particulier robot (1), comprenant un point de fonctionnement (1.3) mobile de façon motorisée et un dispositif de détermination de position destinée à déterminer une position du point de fonctionnement et un dispositif de commande selon la revendication 14.

**16.** Manipulateur selon la revendication 15, **caractérisé en ce qu'**il comprend un dispositif de détermination de force destiné à déterminer une force s'appliquant sur le manipulateur dans le point de fonctionnement, ledit dispositif comprenant au moins un capteur de force de traitement disposé entre une bride (1.1) du manipulateur et un outil (1.2) fixé dessus ou disposé sur l'outil (1.2).

**17.** Manipulateur selon l'une quelconque des revendications 15 à 16, **caractérisé en ce qu'**il comprend un dispositif de détermination de force destiné à déterminer une force s'appliquant sur le manipulateur dans le point de fonctionnement, ledit dispositif comprenant au moins un capteur de force de moteur destiné à déterminer la force appliquée par un moteur du manipulateur en direction d'un axe de déplacement du manipulateur.

Fig. 1

Fig. 2

Fig. 3

Fig. 4

$q_2$    $q_3$

1

1.2

1.1    1.3

$q_1$

Fig. 5

4    2

1

1.3

3

Fig. 6

1

1.3

XS

Fig. 7

$q_2$    $q_3$

1

1.2

1.1    1.3

$q_1$

Fig. 8

4    2

Fig. 9

1

1.3

3

1

1.3

XS

# Fig. 10

S10 — $\boxed{qi}$

S20 — $\boxed{qi \in \{qi\_p\} \ ?}$ — Y

N

S30 — $\boxed{\begin{array}{c} P1 \ \rightarrow \ P1/50 \\ P2 \ \rightarrow \ P2/75 \\ P3 \ \rightarrow \ P3/100 \end{array}}$

S40 — $\boxed{Ti \ = \ Pi \ \times \ (qi\_d - qi)}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0850730 B1

- WO 2007095662 A1